# EUROPÄISCHE PATENTSCHRIFT

(11) **EP 2 786 187 B1**
(45) Veröffentlichungstag und Bekanntmachung des Hinweises auf die Patenterteilung: **28.02.2018**
(21) Anmeldenummer: 12805939.1
(22) Anmeldetag: 26.11.2012
(51) Int. Cl.: G02B 6/255, G02B 6/32

(54) **LASERBASIERTES SPLEISSEN VON GLASFASERN AUF OPTISCHE KOMPONENTEN**
LASER-BASED SPLICING OF GLASS FIBERS ONTO OPTICAL COMPONENTS
ÉPISSURAGE DE FIBRES OPTIQUES SUR DES COMPOSANTS OPTIQUES AU MOYEN D'UN LASER

(30) Priorität: 30.11.2011 DE 102011119713
(43) Veröffentlichungstag der Anmeldung: 08.10.2014
(73) Patentinhaber: Fraunhofer-Gesellschaft zur Förderung der angewandten Forschung e.V., 80686 München (DE)
(72) Erfinder: BÖHME, Steffen, 07743 Jena (DE); SCHREIBER, Thomas, 07745 Jena (DE); FABIAN, Simone, 07743 Jena (DE)
(74) Vertreter: Isfort, Olaf
(86) Internationale Anmeldenummer: PCT/EP2012/004875
(87) Internationale Veröffentlichungsnummer: WO 2013/079184

(56) Entgegenhaltungen:
- EP-A1- 1 367 417
- WO-A1-00/03873
- WO-A2-02/099485

## Beschreibung

Die Erfindung betrifft ein Verfahren zum laserbasierten Spleißen einer Glasfaser auf eine optische Komponente, umfassend folgende Schritte:
- Anordnen beider zu spleißender Oberflächen im Wesentlichen parallel zueinander und mit einem vorgegebenen Abstand voneinander und
- Ausrichten eines Laserstrahls auf die optische Komponente.

Spleißen als Fügeverfahren wird insbesondere bei Fasern und optischen Komponenten eingesetzt, welche für die Ausbreitung von optischen Leistungen im kW-Bereich (z.B. Faserlaser) eingesetzt werden.

Als optische Komponenten kommen z.B. Kieselglas-Endkappen in Frage, welche zur Versiegelung und zum Schutz vor Umwelteinflüssen von photonischen Kristallfasern (PCFs), bei welchen die Lichtführung zum Teil durch Luftkanäle erfolgt, Anwendung finden. Die Endkappen bieten zusätzlich die Möglichkeit einer Funktionalisierung, wie z.B. einer AR-Beschichtung, oder des Versehens der Endkappe mit einer sphärischen oder asphärischen Oberfläche, und können gleichzeitig als Halte- oder Justageelement verwendet werden. Es besteht die Möglichkeit, dass die Endkappen einen größeren Durchmesser als die Faser aufweisen, wodurch der Einsatz herkömmlicher Spleißgeräte nicht möglich ist.

Wenn Fügepartner mit unterschiedlichen Querschnitten, spezifischen Wellenleiterstrukturen und/oder verschiedenen Dotierungen, wie z.B. PCFs, mechanisch stabil und ohne Materialqualitätseinbußen verbunden werden, wird vorzugsweise ein CO₂-Laser als Wärmequelle verwendet. Grund dafür ist, dass die Laserwellenlänge eines CO₂-Lasers sehr gut von den Materialien der Fügepartner (in der Regel Kieselglas) absorbiert wird. Damit werden außerdem Verunreinigungen durch Prozessgase oder Ablagerung von Elektroden- oder Drahtmaterial, welche bei herkömmlichen Verfahren auftreten, ausgeschlossen. Auch ist ein schneller Wechsel zwischen unterschiedlich zu spleißenden Komponenten möglich, wenn die Verfahrensparameter bereits bekannt sind, ohne dass z. B. Elektroden oder Gasdüsen, die einem Verschleiß unterliegen, gewechselt werden müssen oder das Verfahren "eingefahren" werden muss.

Ein solches Verfahren wird beispielsweise in der EP 1 128 960 B1 beschrieben, wonach die Oberfläche einer optischen Komponente mit einem Laserstahl mit nahezu senkrechtem Einfallswinkel bestrahlt und dadurch erwärmt wird.

Es hat sich aber gezeigt, dass ein solches Verfahren zum Spleißen von Spezialfasern, wie z.B. PCFs, sowie Fasern aus unterschiedlichen Materialien wie z.B. Panda-Fasern und passive/aktive Single-Mode-Fasern geringer Führung, nicht geeignet ist, da oft viel zu hohe Temperaturen auftreten, welche die Materialstruktur der Spezialfaser zerstören oder negativ beeinflussen.

Beim Spleißen von PCFs auf optische Komponenten ist es notwendig, dass die Luftkanäle sich bis zum Spleißpunkt erstrecken und nicht vorher zerstört werden, d.h. Kollabieren, um die optischen Eigenschaften zu erhalten.

Bei Spezialfasern, die aus unterschiedlichen oder unterschiedlich dotierten Materialien bestehen, ist hingegen wichtig, dass während des Spleißverfahrens die Materialeigenschaften, die auf die unterschiedliche Zusammensetzung der Faser zurückzuführen sind, erhalten bleiben. Zu hohe Temperaturen beim Spleißen führen dazu, dass Diffusions- oder Ausgasvorgänge auftreten können, welche die optischen Eigenschaften der Faser negativ verändern.

Der Erfindung liegt daher die Aufgabe zugrunde, ein gegenüber dem Stand der Technik verbessertes Verfahren anzugeben, bei welchem die Eigenschaften der Fügepartner beim Spleißen weitestgehend erhalten bleiben, welches eine hohe Reproduzierbarkeit aufweist und insbesondere zum Spleißen von Fügepartnern unterschiedlicher Querschnitte geeignet ist.

Diese Aufgabe wird dadurch gelöst, dass der Einfallswinkel des Laserstrahls auf die Oberfläche der optischen Komponente zwischen 10° und 60°, vorzugsweise zwischen 15°und 45° beträgt.

Der Einfallswinkel ist im Sinne der Erfindung der Winkel zwischen der Laserstrahlrichtung und der Oberflächennormalen der optischen Komponente.

Der Begriff der Glasfaser erfasst im Sinne der Erfindung nicht nur eine einzelne optische Faser, sondern auch ein Faserbündel, dessen Einzelfasern gleichzeitig auf die optische Komponente gespleißt werden sollen.

Durch die Erfindung wird erreicht, das nur ein Teil der Laserleistung auf die zu spleißende Oberfläche der Glasfaser wirkt, da nur ein Teil der Laserenergie, bedingt durch Fresnel-Reflexion, von der Oberfläche der optischen Komponente reflektiert und zur Oberfläche der Glasfaser gelangen kann. Durch geeignete Auswahl des Abstandes zwischen Oberfläche der optischen Komponente und der Glasfaser, des Einfallswinkels des Laserstrahls und/oder der Polarisation der Laserstrahlung können somit in einem einzigen Verfahrensschritt beide Oberflächen auf die für das Spleißen optimale Temperatur gebracht werden, ohne dass die Oberflächen einer unerwünschten und zu hohen thermischen Belastung ausgesetzt werden. Insbesondere können durch die Erfindung ausgewählte Bereiche der Glasfaser weitestgehend thermisch unbelastet bleiben, auch wenn der Abstand zwischen Glasfaser und optischer Komponente sehr klein ist. Beispielsweise kann nur das Material an der Oberfläche der optischen Komponente bis zur Erweichung erwärmt werden, während die Oberfläche der Glasfaser nur soweit hinreichend erwärmt wird, um eine stabile Spleißverbindung herzustellen, ohne dass es aber zu einer relevanten Erweichung des Materials der Glasfaser kommt. Die Struktur der Glasfaser wird in diesem Falle während des Spleißvorgangs zuverlässig erhalten.

Auch ist es möglich, dass die Glasfaser während des Spleißens bereits die optische Komponente berührt, d.h., dass der Abstand zwischen den Fügepartnern null beträgt, und nicht, wie üblich, erst nach Erreichen der Spleißtemperatur mit dieser in Berührung gebracht wird.

Eine bevorzugte Ausführungsform des Verfahrens sieht vor, dass der Laserstrahl mit einer CO₂ Laserquelle erzeugt wird. Die hohe Absorption der CO₂-Laserwellenlänge seitens der Fügepartner bewirkt ein hervorragendes Anschmelzen derselben. Außerdem kann durch geeignete Auswahl der Laserleistung die zu erreichende Temperatur der Fügepartner stufenlos und sehr genau gesteuert werden, was zu sehr guten und reproduzierbaren Ergebnissen führt.

Weiter bevorzugt ist der Laserstrahl als Ringstrahl ausgebildet. Der Laserstrahl bestrahlt dabei eine ringförmige Zone auf der Oberfläche der optischen Komponente. Diese ringförmige Zone kann vollständig bestrahlt werden. Ebenso ist es möglich, dass nur Ringsegmente bestrahlt werden. Dies kann mittels geeigneter Optik durch Strahlformung erfolgen. Alternativ ist es möglich, den Laserstrahl kontinuierlich über die ringförmige Zone auf der Oberfläche der optischen Komponente zu führen. Damit wird nur ein ringförmiger Bereich an der Oberfläche der optischen Komponente aufgeheizt und auf die Oberfläche der Glasfaser reflektiert, wodurch der innere Bereich der Glasfaser, je nach eingestellter Laserleistung, Polarisation, Einfallswinkel des Laserstrahls und Abstand der Fügepartner, nur geringfügig thermisch belastet wird. Dies ist insbesondere bei PCFs, welche oft einen inneren Bereich mit Luftkanälen aufweisen, vorteilhaft, so dass einem Kollaps der inneren Struktur während des Spleißens entgegengewirkt werden kann.

Insbesondere ist es möglich, dass die Form und/oder die Größe der ringförmigen Zone während des Spleißvorgangs variiert werden. Dies kann durch Änderung des Fokus der Laserstrahlung erfolgen (Variation der Ringbreite). Ebenso können Laseroptik und optische Komponente relativ zueinander bewegt werden. Ohne Änderung des Einfallswinkels ändert sich dabei der Durchmesser der ringförmigen Zone. Diese Variation dient der gezielten (zeitlichen) Temperaturführung an den Oberflächen der Fügepartner während des Spleißvorgangs.

Bei einem bevorzugten Ausführungsbeispiel der Erfindung ist der Durchmesser der ringförmigen Zone größer als der Durchmesser der Glasfaser. Dadurch kann erreicht werden, dass die Oberfläche der optischen Komponente zum Zwecke der Erweichung stärker erhitzt wird, während die Glasfaser nur leicht erwärmt wird, um eine stabile Spleißverbindung herzustellen. Die Glasfaser wird nicht direkt von der Laserstrahlung getroffen, eine unerwünschte Beeinträchtigung der Glasfaser durch thermische Belastung wird vermieden.

Der Laserstrahl wird bei einer noch weiter bevorzugten Ausführungsform nicht auf die Oberfläche der optischen Komponente fokussiert, so dass ein homogeneres und großflächigeres Anschmelzen der Oberfläche der optischen Komponente bewirkt werden kann. Außerdem wird somit ermöglicht, dass der Anteil der zur Oberfläche der Glasfaser reflektierten Laserstrahlung verringert wird. Es ist auf diese Weise möglich, durch geeignetes Einstellen der Laserleistung, Einfallswinkel und Fokussierung des Laserstrahls und Abstand zwischen den Fügepartnern, die thermische Belastung der Oberfläche der Glasfaser praktisch unabhängig von derjenigen der optischen Komponente zu steuern.

Bei einer bevorzugten Ausgestaltung des erfindungsgemäßen Verfahrens wird die Leistung des Laserstrahls als Funktion der Zeit während des Spleißvorgangs variiert. Zum Beispiel wird die Laserleistung zunächst von einem Anfangswert bis zu einem Endwert kontinuierlich gesteigert. Dann werden die erwärmten bzw. angeschmolzenen Oberflächen der Fügepartner miteinander zur Herstellung der Spleißverbindung in Berührung gebracht wird. Nach der Herstellung der Verbindung kann die Leistung des Laserstrahls als Funktion der Zeit kontinuierlich reduziert werden. Das langsame "Anfahren" der Laserleistung kann für eine schonende Erwärmung der Fügepartner im Bereich der Spleißstelle genutzt werden. Ebenso bewirkt die stetige Reduzierung der Laserleistung, dass unerwünschte Materialspannungen und entsprechende mechanische Verformungen, die die Qualität der optischen Verbindung beeinträchtigen würden, im Bereich des fertigen Spleißes vermieden werden.

Das erfindungsgemäße Verfahren eignet sich besonders zum Spleißen von Spezialfasern, wie z.B. PCFs, sowie Fasern aus unterschiedlichen Materialien oder mit unterschiedlich dotierten Bereichen, wie z.B. Panda-Fasern oder passiven/aktiven Single-Mode-Fasern geringer Führung. Das erfindungsgemäße Verfahren stellt sicher, dass die Materialstruktur der Spezialfasern während des Spleißens nicht zerstört oder negativ beeinflusst wird.

Die Erfindung wird jetzt anhand eines bevorzugten Ausführungsbeispiels beschrieben. Es zeigt:

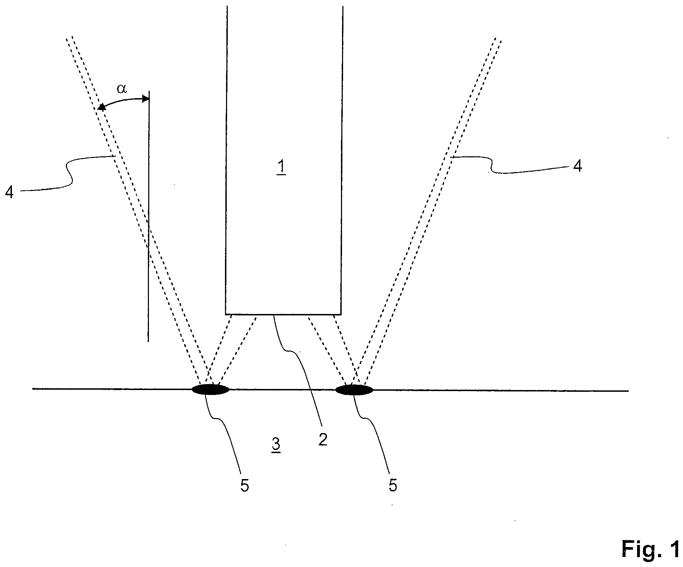

- Fig. 1: eine schematische Seitenansicht zweier Fügepartner.

In der Figur 1 ist schematisch eine Glasfaser 1 gezeigt, welche eine zu spleißende Oberfläche 2 aufweist. Der zu spleißenden Oberfläche 2 zugewandt ist eine optische Komponente 3 angeordnet. Die Glasfaser 1 und die optische Komponente 3 sind aus Kieselglas hergestellt. In der Figur 1 wird z.B. ein Endkappenspleiß an einer PCF hergestellt.

Die zu spleißende Oberfläche 2 ist im Wesentlichen parallel zur Oberfläche der optischen Komponente 3 und von dieser beabstandet angeordnet.

Ein Laserstrahl 4 ist auf den Abschnitt der Oberfläche der optischen Komponente 3, der mit der Glasfaser 1 verbunden werden soll, gerichtet und weist einen Einfallswinkel α, welcher zwischen 15° und 45° liegt, auf.

Bei dem Laserstrahl 4 handelt es sich um einen als Ringstrahl geformten Laserstrahl einer nicht gezeigten CO₂-Laserquelle, welcher aufgrund der Übersichtlichkeit nur schematisch durch die mit 4 bezeichneten gestrichelten Linien dargestellt ist. Die Strahlung 4 hat bei dem Ausführungsbeispiel eine Kegelmantelform, die entweder durch Strahlformung mittels geeigneter optischer Komponenten oder durch kontinuierliche Ablenkung des Laserstrahls 4 erzeugt wird. Der Laserstrahl 4 bestrahlt eine Ringzone 5, deren Durchmesser größer ist als derjenige der Glasfaser 1. Die Glasfaser 1 wird nicht direkt von dem Laserstrahl 4 getroffen.

Wie in der Figur 1 zu erkennen ist, ist der Laserstrahl 4 nicht auf die Oberfläche der optischen Komponente 3 fokussiert. Das leicht divergente Strahlenbündel des Laserstrahls 4 trifft auf die Oberfläche der optischen Komponente 3 auf und bestrahlt dort die Ringzone 5, die aufgrund der Defokussierung eine entsprechende Breite hat.

Die Oberfläche der optischen Komponente 3 wird durch die Laserstrahlung 4 bis zur Erweichung des Materials erhitzt.

Ein Teil des Laserstrahls 4 wird, von der Fokussierung des Laserstrahls und vom Einfallswinkel α abhängig, von der Oberfläche der optischen Komponente 3 reflektiert und zur Oberfläche 2 der Glasfaser 1 gelenkt wo er eine Erwärmung der Glasfaser 1 bewirkt, ohne dass es zur Erweichung und damit zur Zerstörung der Struktur der Glasfaser 1 kommt. Die Erwärmung der Faser 1 ist allerdings zur Gewährleistung einer stabilen Spleißverbindung erforderlich.

Wenn die Glasfaser 1 und die optische Komponente 3 die jeweils gewünschte Temperatur erreicht haben, werden diese in Berührung gebracht, um die Spleißverbindung herzustellen (nicht dargestellt).

## Patentansprüche

1. Verfahren zum laserbasierten Spleißen einer Glasfaser (1) auf eine optische Komponente (3), umfassend folgende Schritte:
- Anordnen beider zu spleißender Oberflächen im Wesentlichen parallel zueinander und mit einem vorgegebenen Abstand voneinander und
- Ausrichten eines Laserstrahls (4) auf die optische Komponente (3), wobei der Einfallswinkel des Laserstrahls (4) auf die Oberfläche der optischen Komponente zwischen 10° und 60°, vorzugsweise zwischen 15° und 45° beträgt,
**dadurch gekennzeichnet, dass** der Abstand zwischen den zu spleißenden Oberflächen und/oder der Einfallswinkel des Laserstrahls und/oder die Polarisation des Laserstrahls in der Weise aufeinander abgestimmt werden, dass der von der Oberfläche der optischen Komponente reflektierte Laserstrahl die zu spleißende Oberfläche der Glasfaser erwärmt, wobei der Laserstrahl eine ringförmige Zone auf der Oberfläche der optischen Komponente (3) ganz oder teilweise bestrahlt.

2. Verfahren nach Anspruch 1, **dadurch gekennzeichnet, dass** der Laserstrahl (4) polarisiert ist.

3. Verfahren nach einem der Ansprüche 1 bis 2, **dadurch gekennzeichnet, dass** der Laserstrahl mittels einer CO₂-Laserquelle erzeugt wird.

4. Verfahren nach einem der Ansprüche 1 bis 3, **dadurch gekennzeichnet, dass** die Breite und/oder der Durchmesser der ringförmigen Zone während des Spleißvorgangs variiert werden.

5. Verfahren nach einem der Ansprüche 1 bis 4, **dadurch gekennzeichnet, dass** der Durchmesser der ringförmigen Zone größer ist als der Faserdurchmesser.

6. Verfahren nach einem der vorgehenden Ansprüche, **dadurch gekennzeichnet, dass** der Laserstrahl nicht auf die Oberfläche der optischen Komponente fokussiert wird.

7. Verfahren nach einem der Ansprüche 1 bis 6, **dadurch gekennzeichnet, dass** die Leistung des Laserstrahls als Funktion der Zeit während des Spleißvorgangs variiert wird.

8. Verfahren nach einem der Ansprüche 1 bis 7, **dadurch gekennzeichnet, dass** die Glasfaser aus reinem oder dotiertem Kieselglas hergestellt ist.

9. Verfahren nach einem der Ansprüche 1 bis 8, **dadurch gekennzeichnet, dass** die Glasfaser eine photonische Kristallfaser ist.

10. Verfahren nach einem der Ansprüche 1 bis 9, **dadurch gekennzeichnet, dass** die Glasfaser, im Faserquerschnitt gesehen, Bereiche mit unterschiedlicher Dotierung aufweist.

11. Verwendung des Verfahrens nach einem der Ansprüche 1 bis 10 zur Konfektionierung einer Glasfaser mit einem Faserstecker.

12. Verwendung des Verfahrens nach einem der Ansprüche 1 bis 11 zum Spleißen einer Glasfaser auf eine optische Komponente eines Faserlasers.

## Claims

1. Method for laser-based splicing of a glass fiber (1) onto an optical component (3), comprising the following steps:
- arranging both surfaces to be spliced substantially parallel to each other and at a predefined distance from each other; and
- aiming a laser beam (4) at the optical component (3), wherein the angle of incidence of the laser beam (4) on the surface of the optical component ranges between 10° and 60°, preferably between 15° and 45°.
**characterized in that** the distance between the surfaces to be spliced and/or the angle of incidence of the laser beam and/or the polarization of the laser beam are harmonized to each other in such a manner that the laser beam reflected from the surface of the optical component warms-up the glass fiber surface to be spliced, wherein the laser beam entirely or partly irradiates an annular zone on the surface of the optical component (3).

2. Method according to claim 1, **characterized in that** the laser beam (4) is polarized.

3. Method according to any of the preceding claims 1 to 2, **characterized in that** the laser beam is generated by means of a CO₂-laser source.

4. Method according to any of the preceding claims 1 to 3, **characterized in that** the width and/or diameter of the annular zone are varied during the splicing procedure.

5. Method according to any of the preceding claims 1 to 4, **characterized in that** the diameter of the annular zone is greater than the fiber diameter.

6. Method according to any of the preceding claims 1 to 5, **characterized in that** the laser beam is not focused onto the surface of the optical component.

7. Method according to any of the preceding claims 1 to 6, **characterized in that** the performance of the laser beam as a function of time is varied during the splicing procedure.

8. Method according to any of the preceding claims 1 to 7, **characterized in that** the glass fiber is manufactured from pure or endowed silica glass.

9. Method according to any of the preceding claims 1 to 8, **characterized in that** the glass fiber is a photonic crystal fiber.

10. Method according to any of the preceding claims 1 to 9, **characterized in that** the glass fiber, viewed in the fiber cross-section, is comprised of areas having a different endowment.

11. Application of the method according to any of the preceding claims 1 to 10 for confectioning of a glass fiber with a fiber plug.

12. Application of the method according to any of the preceding claims 1 to 11 for splicing of a glass fiber onto an optical component of a fiber laser.

## Revendications

1. Procédé d'épissurage, à base de laser, d'une fibre optique (1) sur un composant optique (3), comprenant les étapes suivantes :
- l'agencement de deux surfaces à épisser essentiellement parallèlement entre elles et avec une distance prédéfinie entre elles, et
- l'orientation d'un faisceau laser (4) sur le composant optique (3), l'angle d'incidence du faisceau laser (4) sur la surface du composant optique étant compris entre 10° et 60°, de préférence entre 15° et 45°,
**caractérisé en ce que** la distance entre les surfaces à épisser et/ou l'angle d'incidence du faisceau laser et/ou la polarisation du faisceau laser est (sont) harmonisée(s) entre eux de telle sorte que le faisceau laser réfléchi par la surface du composant optique chauffe la surface à épisser de la fibre optique, le faisceau laser irradiant totalement ou partiellement une zone annulaire à la surface du composant optique (3).

2. Procédé selon la revendication 1, **caractérisé en ce que** le faisceau laser (4) est polarisé.

3. Procédé selon l'une des revendications 1 à 2, **caractérisé en ce que** le faisceau laser est produit au moyen d'une source laser CO₂.

4. Procédé selon l'une des revendications 1 à 3, **caractérisé en ce que** la largeur et/ou le diamètre de la zone annulaire peut être modifié(e) pendant le processus d'épissurage.

5. Procédé selon l'une des revendications 1 à 4, **caractérisé en ce que** le diamètre de la zone annulaire est plus grand que le diamètre de la fibre.

6. Procédé selon l'une des revendications précédentes, **caractérisé en ce que** le faisceau laser n'est pas focalisé sur la surface du composant optique.

7. Procédé selon l'une des revendications 1 à 6, **caractérisé en ce que** la puissance du faisceau laser est modifiée en fonction du temps pendant le processus d'épissurage.

8. Procédé selon l'une des revendications 1 à 7, **caractérisé en ce que** la fibre optique est fabriquée en verre de silice pur ou dopé.

9. Procédé selon l'une des revendications 1 à 8, **caractérisé en ce que** la fibre optique est une fibre à cristal photonique.

10. Procédé selon l'une des revendications 1 à 9, **caractérisé en ce que** la fibre optique, vue dans la section transversale de la fibre, présente des secteurs avec un dopage différent.

11. Utilisation du procédé selon l'une des revendications 1 à 10 pour la confection d'une fibre optique avec une fiche à fibre.

12. Utilisation du procédé selon l'une des revendications 1 à 11 pour l'épissurage d'une fibre optique sur un composant optique d'un laser à fibre.
